# EUROPÄISCHE PATENTANMELDUNG

(11) **EP 3 603 865 A1**
(43) Veröffentlichungstag der Anmeldung: **05.02.2020**
(21) Anmeldenummer: 19189565.5
(22) Anmeldetag: 01.08.2019
(51) Int. Cl.: B23D 61/02, B23C 5/08

(54) **TRENNSCHEIBE**

(30) Priorität: 03.08.2018 DE 102018118959
(71) Anmelder: Albert Knebel Holding GmbH, 72336 Balingen (DE)
(72) Erfinder: Wörmann, Philipp, 33397 Rietberg (DE); Hermbusche, Günter, 33161 Hövelhof/Riege (DE)
(74) Vertreter: Kohler Schmid Möbus Patentanwälte

(57) **Zusammenfassung**

Eine Trennscheibe (10) für Werkstücke insbesondere aus Faserverbundwerkstoffen mit einem Grundkörper (11) der zumindest bereichsweise mit einer Umfangsverzahnung (12) und mindestens auf einer Seitenfläche mit einer wenigstens bereichsweisen angebrachten Flankenverzahnung (13, 14) versehen ist, wobei die Hauptschneiden (12.1a) zumindest der Mehrzahl der Umfangszähne (12.1) nicht mit den Hauptschneiden (13.1a, 14.1a) der benachbarten Flankenzähne (13.1, 14.1) unmittelbar zusammentreffen und dadurch die Hauptschneiden (12.1a; 13.1a, 14.1a) keine gemeinsame Spanfläche definieren.

## Beschreibung

Die Erfindung betrifft eine Trennscheibe zum Trennen und/oder Nuten von Werkstücken, insbesondere von Werkstücken aus Faserverbundwerkstoffen, mit einem scheibenförmigen Grundkörper, der zumindest bereichsweise mit einer Umfangsverzahnung und mindestens auf einer Seitenfläche mit einer wenigstens bereichsweise angebrachten Flankenverzahnung versehen ist.

Zum Bearbeiten von Composite-Bauteilen aus Faserverbundwerkstoffen werden zurzeit unterschiedliche Werkzeuge eingesetzt. Es können Schaftfräser aus Hartmetall oder auch Hartmetall-Sägen oder Sägen mit gelöteten polykristallinen Diamanten mit herkömmlichen Zahngeometrien eingesetzt werden. Auch die Verwendung von Diamant belegten Trennscheiben mit einer unbestimmten Schneidengeometrie ist möglich. Allerdings ergibt sich bei den bisher eingesetzten scheibenförmigen Werkzeugen zur Zerspanung von Faserverbundwerkstoffen eine nur unzureichende Schnittqualität.

Der Erfindung liegt daher die Aufgabe zugrunde, eine Trennscheibe bereitzustellen, mit der eine exzellente Schnittqualität ohne Delamination oder Faserüberstand auch bei schwer zerspanbaren Composite-Bauteilen aus Faserverbundwerkstoffen erzielbar ist.

Die Aufgabe wird gelöst durch eine Trennscheibe zum Trennen und/oder Nuten von Werkstücken, insbesondere von Werkstücken aus Faserverbundwerkstoffen, mit einem scheibenförmigen Grundkörper, der zumindest bereichsweise mit einer Umfangsverzahnung und mindestens auf einer Seitenfläche mit einer wenigstens bereichsweise angebrachten Flankenverzahnung versehen ist, die erfindungsgemäß dadurch gekennzeichnet ist, dass zumindest bei der Mehrzahl der Zähne der Umfangsverzahnung die Hauptschneiden der Zähne der Umfangsverzahnung nicht mit den Hauptschneiden der Flankenverzahnung unmittelbar zusammentreffen, sodass die Hauptschneiden der Zähne der Umfangsverzahnung und die Hauptschneiden der Zähne der Flankenverzahnung keine gemeinsame Spanfläche ausbilden.

Durch diesen Versatz der Hauptschneiden der Umfangsverzahnung und der Flankenverzahnung entsteht eine Entkopplung der Funktionsweisen der Umfangsverzahnung und der Flankenverzahnung. Bei den marktüblichen Sägen ist dagegen eine Umfangsverzahnung vorgesehen, bei der die Zähne aus einer Hauptschneide und mindestens einer Nebenschneide bestehen, wobei die Nebenschneiden der Zähne eine Flankenverzahnung bilden. Die Haupt- und Nebenschneide treffen sich in einem Eckpunkt des Zahns und definieren gemeinsam eine Ebene, die die Spanfläche bildet. Dadurch sind einige Winkel der Hauptschneide und der Nebenschneide voneinander abhängig. Der Spanwinkel der Hauptschneide bestimmt den Verlauf der Nebenschneide. Der Achswinkel der Hauptschneide, d. h. der Winkel der Hauptschneide mit der Achsrichtung der Trennscheibe wiederrum bestimmt den Keilwinkel der Nebenschneide. Die Ausrichtung der Hauptschneide und der Nebenschneide kann daher nicht gleichzeitig optimal auf die jeweilige Zerspanungsaufgabe eingestellt werden.

Teilweise wird sich daher dadurch geholfen, dass die Trennscheibe mit unterschiedlichen Zahngruppen versehen wird, wobei innerhalb einer Gruppe die Zähne so gestaltet sind, dass die Winkel auf die Hauptschneide und in einer anderen Gruppe auf die Winkel der Nebenschneide optimiert sind. Diejenige Schneide eines Zahns, d. h. Haupt- oder Nebenschneide, bei der die Winkel für den aktuellen Einsatzfall nicht ideal sind, wird beispielsweise durch Zurückschleifen innerhalb einer Gruppe deaktiviert.

Zur Bildung der Oberfläche des Werkstücks tragen daher nur Haupt- und Nebenschneiden mit idealen Schnittwinkeln bei. Allerdings müssen bei diesem Verfahren insgesamt sehr viel mehr Zähne auf die Trennscheibe aufgebracht werden, um die gleiche Schnittgeschwindigkeit zu erreichen. Bei der erfindungsgemäßen Lösung dagegen können durch die Entkopplung der Hauptschneiden der Umfangsverzahnung und der Flankenverzahnung Zähne am Umfang angebracht werden, die alle mit für die Umfangsbearbeitung idealen Winkeln ausgelegt sind. Gleichzeitig können auch die Hauptschneiden der Flankenverzahnung der Trennscheibe auf die Anforderungen an die Zerspanungsaufgabe angepasst und somit die Schnittflächenqualität des Werkstücks deutlich erhöht werden.

Dabei können die Zähne der Umfangsverzahnung und die Zähne der Flankenverzahnung jeweils mindestens eine Nebenschneide aufweisen, wobei diese Nebenschneiden nicht am Zerspanungsvorgang teilnehmen. Die Nebenschneiden von Umfangszähnen und von Flankenzähnen können dabei gegenseitige Schnittpunkte aufweisen. Dies stört die optimale Ausrichtung der Hauptschneiden nicht, da die Nebenschneiden nicht am Zerspanungsvorgang teilnehmen.

Vorzugsweise kann die Flankenverzahnung im radial äußeren Bereich des Grundkörpers der Trennscheibe angeordnet sein. Damit tritt die Wirkung der Hauptschneiden der Flankenzähne unmittelbar nach bzw. vor dem Eingriff der Umfangsverzahnung in das Werkstück in Kraft. Insbesondere beim Schneiden von Nuten können auf diese Weise scharfkantige Nutprofile hergestellt werden.

Dabei kann die Flankenverzahnung mit identischen Flankenzähnen oder mit Gruppen von identischen oder unterschiedlichen Flankenzähnen versehen sein. Die Flankenzähne unterschiedlicher Gruppen können sich insbesondere in der Ausrichtung der Hauptschneiden voneinander unterscheiden. Zur Erzielung einer guten Schnittqualität ist es aber nicht zwingend erforderlich, dass die Flankenschneiden lückenlos am gesamten Umfang der Trennscheibe ausgebildet werden. Das Vorsehen einzelner Gruppen von Flankenzähnen ist ebenfalls möglich. Bei dieser Ausgestaltung kann die Temperatur beim Zerspanen reduziert werden. Die Gruppen können jedoch auch lückenlos aneinandergereiht werden oder ineinander übergehen.

Die Hauptschneiden der Flankenzähne können vorzugsweise unter einem Spanwinkel von -5° bis +5° zur radialen Richtung der Trennscheibe angeordnet sein. Diese Winkelstellungen haben die besten Schnittqualitäten ergeben. Werden unterschiedliche Gruppen von Flankenzähnen vorgesehen, so können in einigen Gruppen die Hauptschneiden der Flankenzähne einen positiven Winkel und die Flankenzähne einer anderen Gruppe einen negativen Winkel mit der radialen Richtung der Trennscheibe einschließen.

Weitere Vorteile ergeben sich, wenn zumindest innerhalb einer Gruppe eine Freifläche eines Flankenzahns in den Spanraum des nächsten Flankenzahns übergeht. Dadurch kann ein Kontakt des Werkstücks mit dem Grundkörper selbst bei 5-Achs-Bewegungen vermieden werden.

Weitere Vorteile, insbesondere hinsichtlich einer Reduzierung der durch den Trennvorgang entstehenden Temperaturen, lassen sich dadurch erzielen, dass am äußeren Umfang der Trennscheibe Kerben oder Aussparungen eingebracht werden.

Auch die Umfangsverzahnung der Trennscheibe kann entweder von identischen Umfangszähnen oder von Gruppen unterschiedlicher Umfangszähne gebildet sein. Insbesondere lassen sich die Umfangszähne durch ihre Ausrichtung so optimieren, dass eine optimale Laufruhe der Trennscheibe erzielt werden kann. Dies kann beispielsweise dadurch erreicht werden, dass die Hauptschneiden der Umfangszähne in einem Winkel zur Achsrichtung der Trennscheibe angeordnet sind. Sind mehrere unterschiedliche Gruppen von Umfangszähnen vorgesehen, so können die Hauptschneiden dieser Gruppen jeweils unterschiedliche Winkel mit der Achsrichtung der Trennscheibe einschließen.

Der Durchmesser der Trennscheibe kann dabei vorzugsweise ein Vielfaches ihrer Dicke betragen. Das Verhältnis zwischen Durchmesser und Dicke lässt sich dabei je nach Einsatzzweck variieren. Weiter kann die Trennscheibe entweder eine zylindrische Form oder auch beispielsweise eine Kegelstumpf-Form aufweisen. Der Grundkörper kann außerdem zwischen seiner Mittelachse und der Flankenverzahnung mit einem Einstich versehen sein. Dadurch lässt sich die Laufruhe und die Geräuschentwicklung der Trennscheibe weiter beeinflussen.

Die Trennscheibe kann aus einem Vollmaterial gefertigt sein. Zahnkörper und Grundkörper können jedoch auch separate Bauteile sein. Dabei ist es von Vorteil, wenn die Zähne der Umfangsverzahnung und die Zähne der Flankenverzahnung aus Hartmetall oder aus Diamant bestehen und dadurch eine hohe Standzeit aufweisen. Die Umfangszähne und/oder die Flankenzähne können an den Grundkörper angelötet oder auch angeklebt oder mittels anderer geeigneter form- oder stoffschlüssiger Verbindungen befestigt sein. Weiter ist es ebenfalls möglich, die Zähne der Umfangsverzahnung und die Zähne der Flankenverzahnung auf gemeinsamen Zahnkörpern auszubilden.

Die erfindungsgemäße Trennscheibe kann in 5-Achs-Bearbeitungsmaschinen eingesetzt werden. Bisher waren 5-Achs-Bearbeitungen von Faserverbundwerkstoffen nur mit Schaftfräsern möglich. Es hat sich jedoch gezeigt, dass eine solche Bearbeitung auch bei Verwendung einer erfindungsgemäßen Trennscheibe möglich ist.

Im Folgenden werden unterschiedliche Ausführungsbeispiele erfindungsgemäßer Trennscheiben mit Bezug auf die Zeichnungen näher beschrieben.

Es zeigen:
- Fig. 1, 1a: eine Ansicht einer ersten Trennscheibe mit einer perspektivischen Detailansicht;
- Fig. 2: eine zweite, vergrößerte Teilansicht der Verzahnung der Trennscheibe aus Fig. 1;
- Fig. 3: einen Ausschnitt einer Flankenverzahnung einer zweiten Trennscheibe;
- Fig. 4: eine perspektivische Teilansicht der Trennscheibe aus Fig. 3;
- Fig. 5: eine Ansicht einer dritten Trennscheibe.

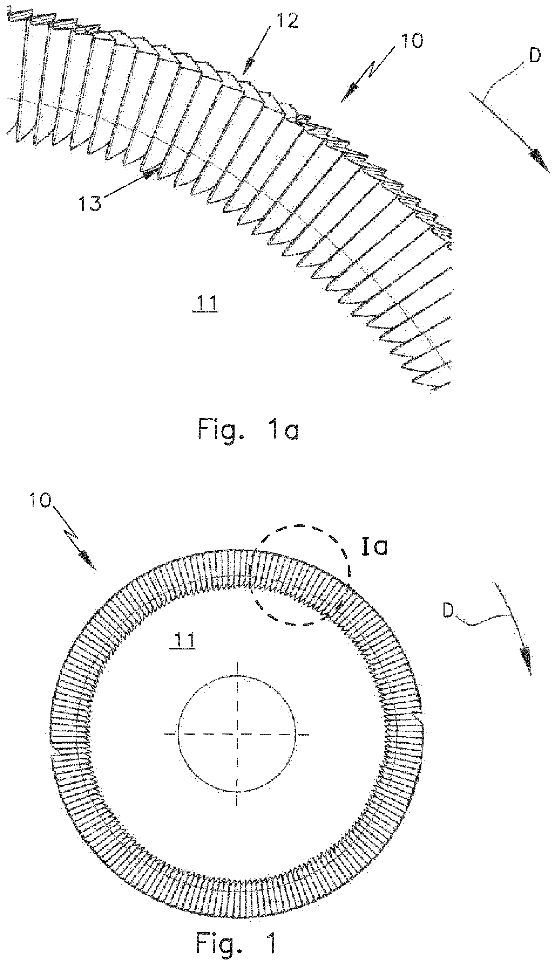

Die Trennscheibe 10 aus Figur 1, 1a weist einen Grundkörper 11 sowie eine lückenlose Umfangsverzahnung 12 und eine lückenlose Flankenverzahnung 13 auf. Die Flankenverzahnung 13 befindet sich im äußeren radialen Bereich des Grundkörpers 11 und schließt unmittelbar an die Umfangsverzahnung 12 an. Die Drehrichtung der Trennscheibe 10 sowie der Trennscheiben in den anderen Figuren ist jeweils durch einen Pfeil D angegeben.

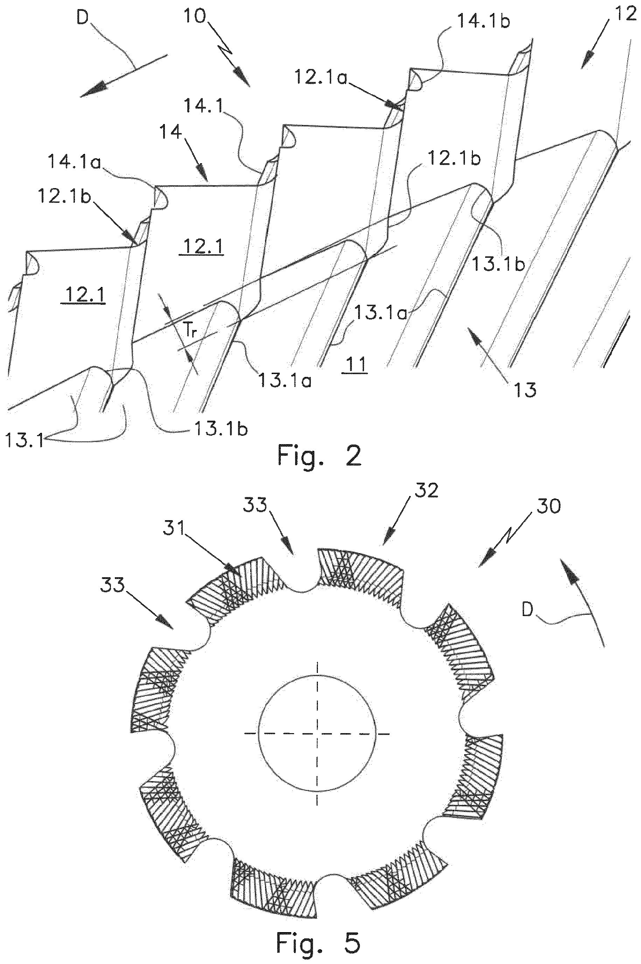

Die Detailansicht der Verzahnung der Trennscheibe 10 aus Figur 2 mit Blick auf die gegenüberliegende Seitenfläche verdeutlicht, dass der Grundkörper 11 auch auf seiner gegenüberliegenden Seitenfläche mit einer Flankenverzahnung 14 versehen ist. Die Detaildarstellung aus Figur 2 verdeutlicht weiter, dass die Umfangsverzahnung 12 von einer Vielzahl von Umfangszähnen 12.1 gebildet ist, wobei jeder Umfangszahn 12.1 eine Hauptschneide 12.1a und zwei Nebenschneiden 12.1b aufweist. Die Flankenverzahnung 13 wird dagegen von einer Vielzahl gleicher Flankenzähne 13.1 gebildet, die eine Hauptschneide 13.1a und eine Nebenschneide 13.1b aufweist. Auch Zähne 14.1 der Flankenverzahnung 14 sind jeweils mit einer Hauptschneide 14.1a und einer Nebenschneide 14.1b versehen. Die Hauptschneiden 12.1a der Umfangsverzahnung 12 und die Hauptschneiden 13.1a sowie 14.1a der Flankenverzahnungen 13, 14 weisen keinen gemeinsamen Schnittpunkt auf. Sie sind vielmehr um einen Abstand Tr voneinander beabstandet. Dies ermöglicht es, die Schneidwinkel der Hauptschneiden 12.1a der Umfangsverzahnung 12 und die Schneidwinkel 13.1a, 14.1a der Flankenverzahnungen 13 und 14 völlig unabhängig voneinander zu wählen und somit für alle drei Verzahnungen 12, 13 und 14 optimale Schneidwinkel einzustellen. Aus Figur 2 ist zudem ersichtlich, dass bei der Trennscheibe 10 sämtliche Nebenschneiden 12.1b, 13.1b und 14.1b nicht am Zerspanungsvorgang teilnehmen.

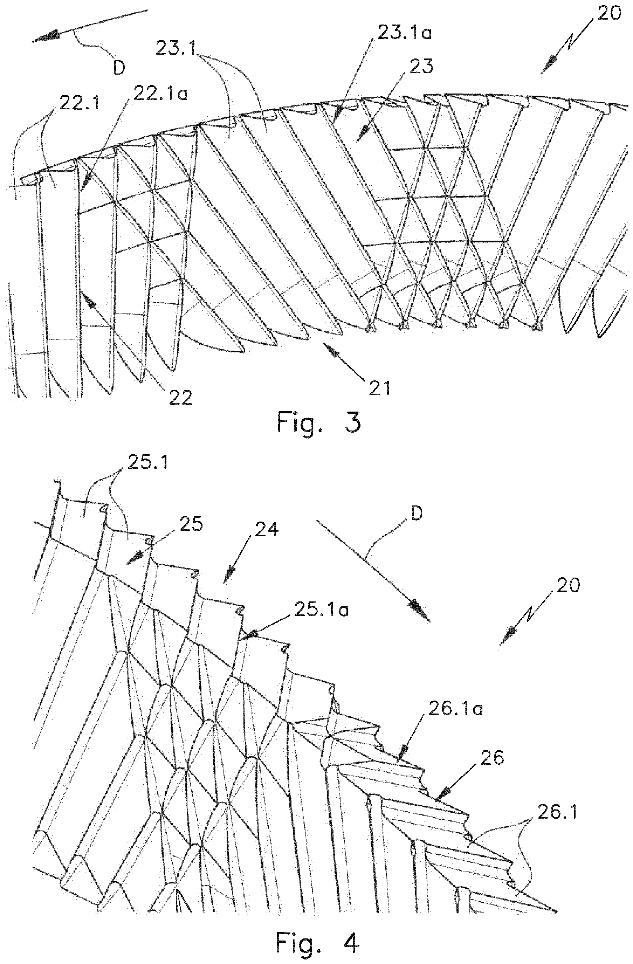

Die Figuren 3 und 4 zeigen eine weitere Variante einer Trennscheibe 20, bei der gemäß Figur 3 eine Flankenverzahnung 21 in unterschiedliche Gruppen 22, 23 aufgeteilt ist, wobei sich die Zähne 22.1 und 23.1 der Gruppen 22 und 23 in der Ausrichtung ihrer Hauptschneiden 22.1a und 23.1a unterscheiden.

Auch eine Umfangsverzahnung 24 der Trennscheibe 20 ist in unterschiedliche Gruppen 25, 26 aufgeteilt, wie Figur 4 verdeutlicht. Dabei weisen die Zähne 25.1, 26.1 der Gruppen 25 und 26 ebenfalls unterschiedliche Ausrichtungen der Hauptschneiden 25.1a und 26.1a auf. Bei der Trennscheibe 20 sind dabei die Gruppen 22, 23 der Flankenverzahnung 21 und die Gruppen 25, 26 der Umfangsverzahnung 24 lückenlos aneinandergereiht. Dies ist jedoch nicht zwingend erforderlich. Sie könnten auch beabstandet voneinander angeordnet sein.

Figur 5 zeigt eine dritte Ausführungsform einer Trennscheibe 30, die hinsichtlich ihrer Flankenverzahnung 31 und ihrer Umfangsverzahnung 32 der Trennscheibe 20 entspricht. Allerdings sind am Umfang der Trennscheibe 30 in regelmäßigen Abständen Aussparungen 33 vorgesehen, die einer Überhitzung des Werkstücks beim Trennvorgang entgegenwirken sollen.

## Patentansprüche

1. Trennscheibe zum Trennen und/oder Nuten von Werkstücken, insbesondere von Werkstücken aus Faserverbundwerkstoffen, mit einem scheibenförmigen Grundkörper (11), der zumindest bereichsweise mit einer Umfangsverzahnung (12, 24, 32) und mindestens auf einer Seitenfläche mit einer wenigstens bereichsweise angebrachten Flankenverzahnung (13, 14, 21, 31) versehen ist, **dadurch gekennzeichnet, dass** zumindest bei der Mehrzahl der Zähne (12.1, 25.1, 26.1) der Umfangsverzahnung (12, 24) die Hauptschneiden (12.1a, 25.1a, 26.1a) der Zähne (12.1, 25.1, 26.1) der Umfangsverzahnung (12, 24) nicht mit den Hauptschneiden (13.1a, 14.1a, 22.1a, 23.1a) der Flankenverzahnung (13, 14, 21) unmittelbar zusammentreffen, sodass die Hauptschneiden (12.1a, 25.1a, 26.1a) der Zähne (12.1, 25.1, 26.1) der Umfangsverzahnung (12, 24) und die Hauptschneiden (13.1a, 14.1a, 22.1a, 23.1a) der Zähne (13.1, 14.1, 22.1, 23.1) der Flankenverzahnung (13, 14, 21) keine gemeinsame Spanfläche ausbilden.

2. Trennscheibe nach Anspruch 1, **dadurch gekennzeichnet, dass** die Zähne (12.1) der Umfangsverzahnung (12) und die Zähne (13.1, 14.1) der Flankenverzahnung (13, 14) jeweils mindestens eine Nebenschneide (12.1b, 13.1b, 14.1b) aufweisen, wobei die Nebenschneiden (12.1b, 13.1b, 14.1b) nicht am Zerspanungsvorgang teilnehmen.

3. Trennscheibe nach Anspruch 1 oder 2, **dadurch gekennzeichnet, dass** die Flankenverzahnung (13, 14, 21, 31) im radial äußeren Bereich des Grundkörpers (11) der Trennscheibe (10, 20, 30) angeordnet ist.

4. Trennscheibe nach Anspruch 3, **dadurch gekennzeichnet, dass** der radial äußere Bereich des Grundkörpers (11) der Trennscheibe (10, 20, 30) zumindest auf einer Seitenfläche mit einer Flankenverzahnung (13, 14) mit identischen Flankenzähnen (13.1, 14.1) oder mit Gruppen (22, 23) von identischen oder unterschiedlichen Flankenzähnen (22.1, 23.1) versehen ist.

5. Trennscheibe nach Anspruch 4, **dadurch gekennzeichnet, dass** die Gruppen (22, 23) von Flankenzähnen (22.1, 23.1) mit unterschiedlich ausgebildeten Flankenzähne (22.1, 23.1) lückenlos aneinandergrenzend oder beabstandet zueinander angeordnet sind.

6. Trennscheibe nach einem der vorhergehenden Ansprüche, **dadurch gekennzeichnet, dass** der Grundkörper (11) auf beiden Seiten mit einer Flankenverzahnung (13, 14) versehen ist, wobei die Flankenverzahnungen (13, 14) der beiden Seitenflächen unterschiedlich oder identisch gestaltet sind.

7. Trennscheibe nach einem der vorhergehenden Ansprüche, **dadurch gekennzeichnet, dass** eine Freifläche eines Flankenzahnes (13.1, 14.1, 22.1, 23.1) in den Spanraum des nächsten Flankenzahnes (13.1, 14.1, 22.1, 23.1) übergeht.

8. Trennscheibe nach einem der vorhergehenden Ansprüche, **dadurch gekennzeichnet, dass** am äußeren Umfang der Trennscheibe (30) Kerben oder Aussparungen (33) eingebracht sind.

9. Trennscheibe nach einem der vorhergehenden Ansprüche, **dadurch gekennzeichnet, dass** die Umfangsverzahnung (12, 24) von identischen Umfangszähnen (12.1, 25.1, 26.1) oder Gruppen (25, 26) unterschiedlicher Umfangszähne (25.1, 26.1) gebildet ist.

10. Trennscheibe nach einem der vorhergehenden Ansprüche, **dadurch gekennzeichnet, dass** die Hauptschneiden (12.1a, 25.1a, 26.1a) der Umfangszähne (12.1, 25.1, 26.1) in einem Winkel zur Achsrichtung der Trennscheibe (10, 20, 30) angeordnet sind.
